# EUROPEAN PATENT SPECIFICATION

(11) **EP 1 585 896 B1**
(45) Date of publication and mention of the grant of the patent: **25.07.2012**
(21) Application number: 03814583.5
(22) Date of filing: 14.08.2003
(51) Int. Cl.: F02K 1/30

(54) **APPARATUS AND METHOD FOR CONTROLLING PRIMARY FLUID FLOW USING SECONDARY FLUID FLOW INJECTION**
VORRICHTUNG UND VERFAHREN ZUR STEUERUNG VON PRIMÄRFLUIDSTROM UNTER VERWENDUNG VON SEKUNDÄRFLUIDSTROMEINSPRITZUNG
APPAREIL ET PROCEDE POUR COMMANDER LE FLUX DE FLUIDE PRIMAIRE EN SE SERVANT DE L'INJECTION DU FLUX DE FLUIDE SECONDAIRE.

(30) Priority: 18.12.2002 US 323484
(43) Date of publication of application: 19.10.2005
(73) Proprietor: Lockheed Martin Corporation, Bethesda, MD 20817 (US)
(72) Inventor: LEE, Douglas, Valencia, CA 91355 (US); ANDERSON, J., Thomas, Santa Clarita, CA 91351 (US); HERSHBERGER, Brian, K., Canyon Country, CA 91351 (US)
(74) Representative: Ertl, Nicholas Justin
(86) International application number: PCT/US2003/025664
(87) International publication number: WO 2004/061286

(56) References cited:
- EP-A- 1 158 156
- US-A- 3 212 259
- US-A- 3 374 954
- US-A- 3 387 787
- US-A- 3 737 103
- US-A- 4 018 384
- US-A- 6 112 512
- VEER VAN DER M R ET AL: "COUNTERFLOW THRUST VECTOR CONTROL OF SUBSONIC JETS: CONTINUOUS AND BISTABLE REGIMES" JOURNAL OF PROPULSION AND POWER, AMERICAN INSTITUTE OF AERONAUTICS AND ASTRONAUTICS. NEW YORK, US, vol. 13, no. 3, May 1997 (1997-05), pages 412-420, XP001172963 ISSN: 0748-4658

## Description

### Technical Field

The present invention relates to deflecting the flow direction of a primary fluid, and more particularly to apparatus and method whereby a secondary fluid is injected into the primary fluid stream to change the direction of flow of the primary fluid stream.

### Description of the Related Art

Thrust vectored aircraft have many advantages over aircraft using conventional aerodynamic control surfaces. They can lead to tactical advantages in the aircraft's agility and maneuverability and also to improved take-off and landing performance, e.g. on battle-damaged runways or aircraft carriers. Thrust vectored aircraft can also operate outside of the conventional flight envelope, i.e., in the post-stall regime thus giving the pilot a significant advantage leading to improved survivability.

Designing aircraft without tails offers the potential for reduced weight and increased performance, efficiency and stealth. Aircraft such as the X-31 have demonstrated flight without a tail through a supersonic in-flight experiment in which the flight control system reacted as though the aircraft had no tail. The thrust vectoring capability was used to provide necessary aircraft stability, trim and control.

Most of the research in this field has been directed at designing and developing mechanically based systems. Although these systems are effective and may also lead to the removal of conventional moving surfaces and hence to a reduction in drag, they carry many disadvantages. For example, they often involve the use of complex mechanical actuation systems. They are also usually very expensive, difficult to integrate and aerodynamically inefficient. Further, as stealth requirements become ever more important, the radar cross section (RCS) and infra-red radiation (IR) signatures of military aircraft must be minimized.

One alternative to mechanical systems is known as fluidic thrust vectoring, which uses a secondary fluid stream to change the vector angle of a primary exhaust fluid stream from an engine nozzle, thus leading to a change in the overall orientation of the aircraft. Fluidic thrust vectoring involves no external moving parts thus leading to a decrease in radar cross section and infrared signature. Additionally it is lightweight, inexpensive, and easy to implement.

Extensive research of different nozzle shapes and aspect ratios has previously been conducted in connection with future aircraft configurations. Some of the prior innovations focus on the integration and aerodynamic efficiency of the exhaust system. Other innovations focus on mechanical configurations that are intended to effect thrust vectoring. Still other innovations have incorporated fluidic principles with the objectives of generating thrust vectoring power or controlling the effective flow area of a nozzle. For example, US Patent No. 5,996,936 to Mueller discloses an exhaust nozzle for a gas turbine engine which includes a converging inlet duct in flow communication with a diverging outlet duct at a throat therebetween. Compressed air from the engine is selectively injected through a slot at the throat for fluidically varying flow area at the throat.

US Patent No. 6,112,512 to Miller et al. discloses an apparatus and method for varying the effective cross sectional area of an opening through a fixed geometry nozzle to provide a fluidic cross flow with an injector incorporated in the throat of the nozzle proximate to the subsonic portion of the flow through the nozzle. One or more injectors are directed at an angle in opposition to the subsonic portion of the flow. The opposed cross flow from the injectors interacts with a primary flow through the nozzle to partially block the nozzle's opening, thereby effectively decreasing the cross sectional area of the nozzle throat. A plurality of cross flows proximate to a nozzle's throat permits effective afterburner operations even with a fixed geometry nozzle by allowing throttling of the primary flow. Further, variations in the cross flow's mass flow characteristics or injection angle can allow vectoring of the primary flow.

US Patent No. 4,018,384 to Fitzgerald et al. teaches deflection of only a portion of the fluid thrust emanating from a nozzle, but the deflection takes place as a result of mechanical devices rather than another fluid stream. US Patent No. 4,686,824 to Dunaway et al. discloses apparatus for modulating the thrust vector of a rocket motor by injecting gas into the divergent section of the rocket nozzle and modulating injection of the hot gas by varying the flow from a solid propellant gas generator by controlling its flow rate with a vortex throttling valve arrangement. And US Patent No. 5,694,766 to Smereczniak et al. discloses a method and apparatus for controlling the throat area, expansion ratio and thrust vector of an aircraft turbine engine exhaust nozzle, using means, such as deflectors and/or injected air, for producing and controlling regions of locally separated flow, as well as control of the thrust vector angle defined by the gas exiting the nozzle to provide increased directional control of the aircraft.

The nozzle shapes studied in the patents mentioned above tend to be circular or of low aspect ratio. Fluidic injection from the top, bottom, and sidewall surfaces of nozzles and combinations of the three have also been analyzed, but have failed to produce the high levels of thrust vectoring and aerodynamic performance thought to be needed for quick maneuverability and efficient performance. Until recently, the amount of thrust vector angle generated with fluidics has not been high, typically less than eight degrees, and therefore, thrust vectoring through fluidics alone has only been found to be applicable to a very limited range of vehicle designs. Moreover, the efficiency of prior nozzle designs which used fluid injection or secondary flow to generate thrust vectoring has been quite low, typically on the order of 1.6 degrees of vector angle or less per each percent of secondary flow ***F**₂* extracted from the primary flow ***F**₁* at a primary nozzle pressure equal to 4 times the free-stream static pressure (Nozzle Pressure Ratio (NPR)). Thus, since it typically is not desirable to extract more than 10 percent of the primary flow to provide secondary flow, peak thrust vector angles have been low while inefficiently utilizing high secondary flow rates in nozzle shapes that are limited in their applicability to advanced aircraft designs and requirements.

It is therefore desirable to provide increased fluidic thrust vectoring capability to enhance vehicle manoeuvrability, as well as decrease radar and infrared cross section, and minimize requirements for additional moving parts, thereby improving reliability while reducing weight, cost, and complexity.

EP 1 158 156 discloses a fluidic nozzle control system for influencing an aircraft engine thrust vector using controlled fluid jets in the thrust nozzle.

The article "Counterflow Thrust Vector Control of Subsonic Jets: Continuous and Bistable Regimes" by M.R. Van der Veer et al, Journal of Propulsion and Power, vol. 13, no. 3, May -June 1997 discloses fluidic thrust vectoring using asymmetric application of counterflow to the jet shear layers.

### Summary

Against this background of known technology, an apparatus to develop relatively high thrust vectoring power and efficiency in a broad range of configurations is provided.

The invention provides an apparatus as defined in claim 1 and a method as defined in claim 39.

Some embodiments of such an apparatus include a nozzle with one or more injectors that introduce a secondary fluid against the direction of flow of a primary thrust fluid, thereby providing an apparatus with high thrust vectoring capability that can be easily integrated into a wide variety of vehicle configurations. The thrust vectoring nozzle can exert forces in one or more directions simultaneously to maneuver and control the vehicle about one or more axes of movement including pitch, roll and/or yaw.

In one embodiment, the injector (s) are formed in the sidewalls of the nozzle by drilling or otherwise forming a hole at an angle relative to the surface of the sidewall. A plenum is attached to one side of the nozzle sidewall to deliver the secondary fluid to the injector (s). Any number, size, and configuration of injectors can be disposed in each sidewall to provide the desired amount of manoeuvring control. In general, the injectors can be disposed at any position, but are typically positioned as close to the exit area of the primary flow as possible.

A controller can be included to regulate the amount and duration of secondary flow delivered. The controller can be coupled to regulate the secondary flow to one or more plenums simultaneously. An operator or an autonomous control system can provide attitude or attitude rate commands, which are translated to secondary flow injections by the controller. Attitude and attitude rate feedback can be provided to the controller to allow the controller to refine the amount of secondary flow injected over time.

A variety of nozzle shapes and sizes can be configured to accommodate the injectors in their sidewalls, including high aspect ratio nozzles capable of generating thrust vectoring capability beyond that available in the prior art.

The secondary fluid can be provided by extracting some of the primary fluid, or by providing an independent source of secondary fluid.

While various configurations of the nozzles can be utilized in air vehicles, it is expected that embodiments of a device for altering the direction of flow of a primary fluid using secondary fluid injection can be utilized in other types of vehicles as well. The primary and secondary fluids can be in gaseous, solid particle, or liquid form. Other advantages and features of the invention will become more apparent, as will equivalent structures which are intended to be covered herein, with the teaching of the principles of embodiments of the present invention as disclosed in the following description, claims, and drawings.

### Brief Description Of The Drawings

A more complete understanding of the present invention and advantages thereof may be acquired by referring to the following description taken in conjunction with the accompanying drawings in which like reference numbers indicate like features and wherein:
Figure 1A is a perspective view of an embodiment of a thrust vectoring nozzle.
Figure 1B is a perspective view of the nozzle of Fig. 1A including a plenum for supplying secondary fluid flow attached to the nozzle.
Figure 2 depicts a side sectional view of an embodiment of a thrust vectoring engine.
**Figure 3A** depicts an embodiment of a nozzle showing an exhaust stream of unvectored primary fluid flow.
**Figure 3B** depicts an embodiment of the nozzle of **Fig. 3A** showing a secondary fluid flow injected in the exhaust stream of the primary fluid to effect thrust vectoring.
**Figures 4A** through **4G** depict end views of some examples of nozzle configurations in which secondary fluid injection can be utilized to provide thrust vectoring.

### Detailed Description

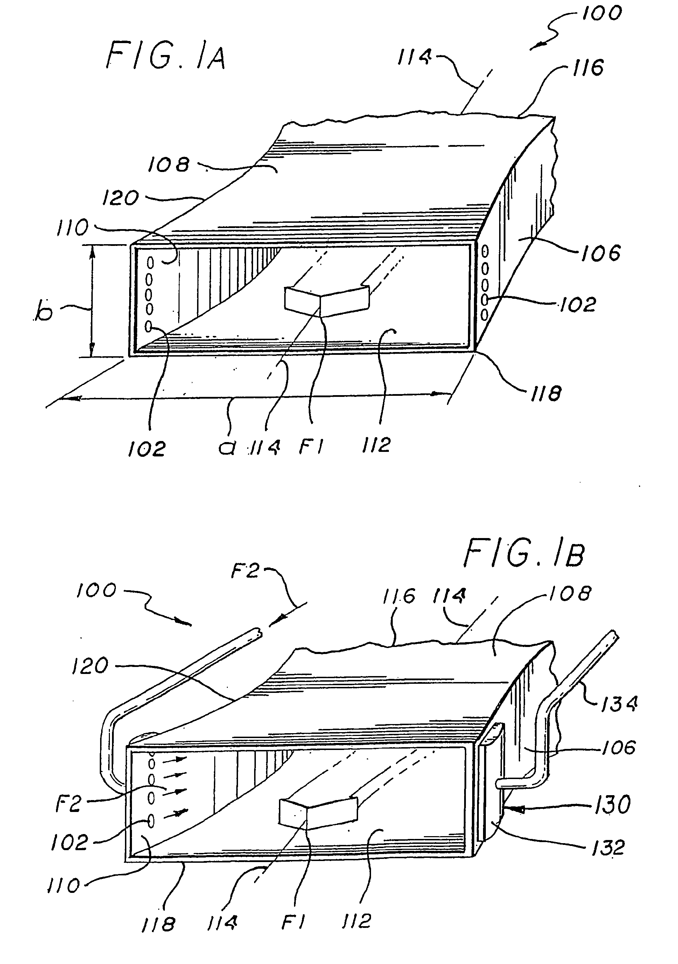

Referring now to **Figs. 1A** and **1B**, an embodiment of nozzle **100** is shown including thrust vectoring features that enhance vehicle maneuverability without requiring complex moving parts or increasing radar or infrared signatures. One or more injectors **102** are provided, such as by drilling holes in one or more of the sidewalls of nozzle **100**. Injectors **102** are oriented to inject a secondary fluid flow ***F₂*** at an angle opposing the direction of the primary fluid flow ***F₁***. The force of the injected secondary fluid flow ***F₂*** on the primary fluid flow ***F₁*** changes the direction of the exhaust thrust vector. Nozzle **100** accordingly provides a reliable, low cost, highly effective thrust vectoring solution that can be easily implemented with minimal additional weight as further described herein.

Sidewalls **106** to **112** of nozzle **100** enclose a cavity centered about thrust axis **114**. A convergent inlet area **116** forms the upstream end of nozzle **100**, and a divergent exit area **118** forms the downstream end of nozzle **100.** During operation, primary fluid flow ***F₁*** enters inlet area **116** and is exhausted through exit area **118.** Nozzle **100** also includes a throat area **120** positioned between inlet area **116** and exit area **118.** Throat area **120** is the point or section in nozzle **100** having the smallest cross sectional area. In some embodiments, exit area **118** is a two-dimensional nozzle configuration in which the sidewalls **106** to **112** form a substantially rectangular shape. The term aspect ratio as used herein refers to the ratio of the length ***a*** of sidewall **108** or **112** to the length ***b*** of sidewall **106** or **110.** The thrust-vectoring control moments are proportional to the thrust vector deflection angle and the force exerted by the vectored primary fluid flow *F₁.* As the aspect ratio of exit area 118 increases, the force of the injected secondary fluid flow F₂ influences primary flow F₁ more efficiently, thus increasing the thrust vector deflection angle per unit secondary flow. The aspect ratio, along with other design variables, can therefore be selected to achieve desired thrust vectoring moments. Secondary fluid flow F₂ can be injected continuously. Alternatively, secondary fluid flow F₂ can be injected at regular or irregular pulsed intervals.

Injectors 102 are formed in at least one of sidewalls 106 to 112 through which secondary fluid flow F₂ can be injected into the divergent exhaust area 118. Thrust-vectoring can generate pitch, roll, and yaw control moments by deflecting the primary flow ***F₁*** vertically and horizontally. For single nozzle configurations, vertical deflections cause pitching moments, and horizontal deflections cause yawing moments. Multiple nozzles **100** can be positioned at desired locations relative to the axes of the vehicle so that vertical deflections cause pitching moments, differential vertical deflections cause rolling moments, and horizontal deflections cause yawing moments. In some embodiments, injector(s) **102** are disposed on opposing sidewalls **106** and **110.** In other embodiments, one or more injectors **102** can be formed in only one of sidewalls **106** or **110.** Injectors **102** can be arranged in rows having the same or a different number of injectors **102** in each row. Groups of injectors **102** can be arranged in sidewalls **106** to **112** to meet the requirements for a particular use.

While injectors **102** can be positioned at various locations on sidewalls **106, 108, 110,** and/or **112,** the greatest amount of thrust vectoring is typically achieved by positioning injectors **102** as close to the free stream edge of exit area **118** as possible. The force exerted by secondary fluid flow ***F₂*** is also dependent on the diameter of injectors **102** and the pressure of secondary fluid flow ***F₂*.** Injectors **102** with larger diameters and lower pressure can achieve the same overall fluid mass flow as smaller diameters with higher pressure secondary fluid flow ***F₂*.** Any combination of number, size, and location of injectors **102,** and rate of secondary fluid flow ***F₂*,** can be configured to provide the desired thrust vectoring capability.

**Fig. 1B** is a perspective view of nozzle **100** including plenum **130** for supplying secondary fluid flow ***F₂*** to injectors **102.** Plenum **130** includes a compartment or chamber **132** to which one or more air ducts **134** are connected to form part of the distribution system for secondary fluid flow ***F₂***. Plenum **130** can be attached to sidewall **106** using any suitable method or mechanism, such as welding, mechanical fastener(s) or structure, and bonding. A gasket (not shown) or other device can be included between sidewall **106** and plenum **130** to provide an airtight seal. Plenum **130** can be configured to supply secondary fluid flow ***F₂*** to one or more injectors **102** on one or more sidewalls **106, 108, 110,** and/or **112.** Alternatively, two or more plenums **130** can be included to supply secondary fluid flow ***F₂*** to different subsets of a group of injectors **102** on a single sidewall **106, 108, 110, 112.** Such a configuration could be used to supply secondary fluid flow ***F₂*** at the same or at different pressures to different injectors **102**. In some configurations, subsets of injectors **102** having the same or different diameters can receive secondary fluid flow ***F₂*** from different plenums **130** to provide flexibility in supplying secondary fluid flow ***F₂*** required to achieve the desired thrust vectoring forces.

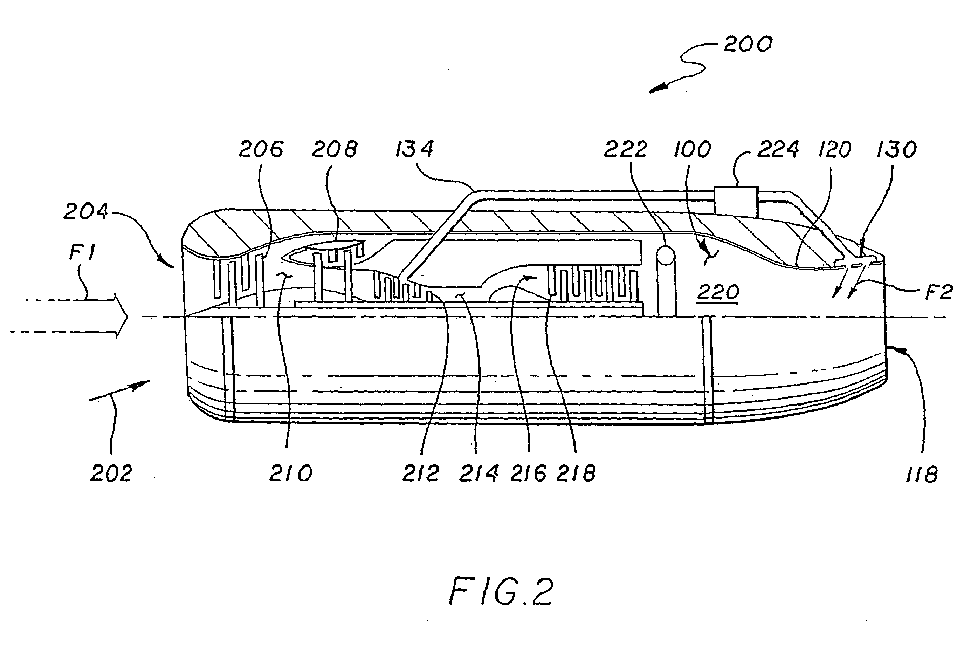

**Fig. 2** depicts a side cross-sectional view of an embodiment of jet engine **200** equipped with nozzle **100** and plenum **130**. In general, secondary fluid flow ***F₂*** can be generated by extracting off a controlled amount of primary fluid flow ***F₁***, however it is usually desirable to extract as little of primary fluid flow ***F₁*** as possible to preserve forward thrust. The amount of secondary fluid flow ***F₂*** utilized in a particular situation can be selected based on the amount of forward thrust versus the amount of thrust vectoring capability desired.

Primary fluid flow ***F₁*** of air enters jet engine **200** through intake **202**. Fan section **204**, comprised of a plurality of rotating fan blades **206**, pushes flow ***F₁*** into bypass section **208** and compressor section **210**. Compressor section **210** is comprised of a plurality of compressor blades **212** which compress flow ***F₁*** into combustion chamber **214**. Fuel is mixed with flow ***F₁*** in combustion chamber **214** and ignited, thereby adding energy to flow ***F₁***, resulting in an increased pressure and temperature of flow ***F₁*** in combustion chamber **214**. Pressure within combustion chamber **214** forces flow ***F₁*** into turbine section **216**, which is comprised of a plurality of turbine blades **218**. Turbine section **216** removes some energy from flow ***F₁*** to power compressor section **210** and fan section **204**. Flow ***F₁*** then passes into exhaust chamber **220** where it combines with the flow from bypass section **208**. An afterburner **222** can provide additional fuel that is ignited to increase the energy of flow ***F₁***. Flow ***F₁*** is then expelled from engine **200** through exit area **118** as an exhaust flow.

Air duct **134** collects high pressure air from flow ***F₁*** at compressor section **210** to provide secondary fluid flow *F₂* to injectors **102**. In alternative embodiments, air duct **134** can collect air from bypass section **208**, combustion chamber **214** or any other portion of engine **200** having high pressure air. In some embodiments, a separate compressor can provide high pressure air to air duct **134**. A controller **224** controls a valve (not shown) operationally coupled to air duct **134** to regulate secondary fluid flow ***F₂*** to injectors **102**. One or more air ducts **134** can provide secondary fluid flow ***F₂*** to one or more injectors **102**.

In operation, controller **224** can vary the amount of secondary fluid flow ***F₂*** injected into nozzle **100** to achieve the desired amount of thrust vectoring. For example, pitch, roll, yaw, and airspeed commands can be provided to controller **224** to determine the amount of primary flow ***F₁*** to divert to provide thrust vectoring. Gradual changes in pitch, roll, and yaw attitude typically will require less secondary fluid flow ***F₂*** than rapid changes. Controller **224** can direct an appropriate amount of secondary fluid flow ***F₂*** to achieve the commanded rate of change of pitch, roll, or yaw attitude. In one embodiment, a mechanical valve can provide a mechanism for controlling the amount of secondary fluid flow ***F₂*** injected into nozzle **100**. In another embodiment, each injector **102** or group of injectors **102** can be controlled by its own associated controller **224**. Controller **224** can include processing hardware, firmware, and/or software with instructions for controlling engine operational parameters and thrust vectoring. In other embodiments, the function of controlling engine **200** and thrust vectoring via injection of secondary fluid flow ***F₂*** can be accomplished with separate controllers.

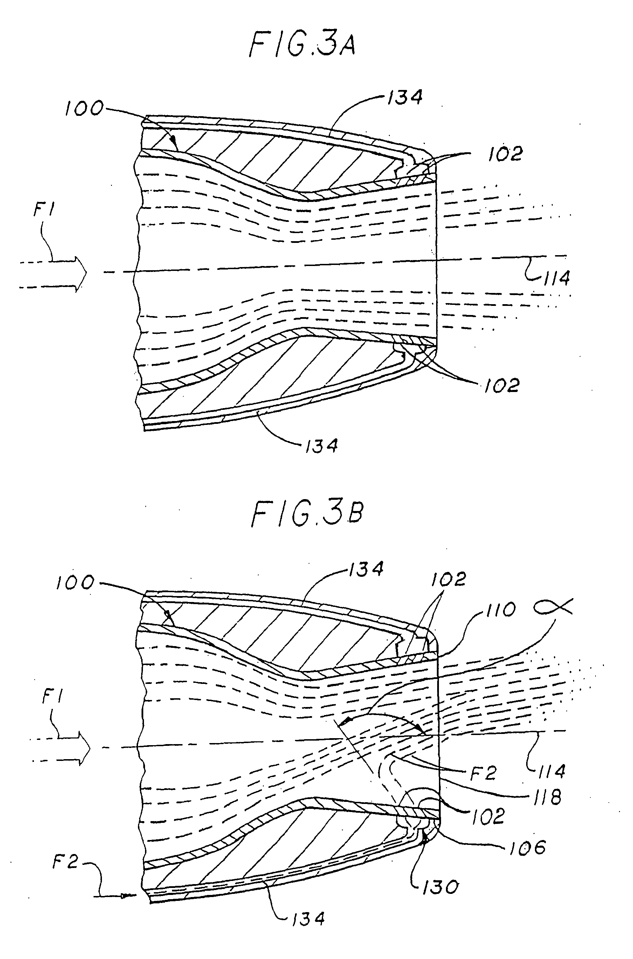

Referring now to **Figs. 3A** and **3B**, **Fig. 3A** depicts a cross-sectional side view of an embodiment of nozzle **100** that includes two injectors **102**. As shown, no secondary fluid flow *F₂* is being supplied through injectors **102** via air duct **134**. The only fluid within nozzle **100** is primary fluid flow ***F₁*** passing through throat **120** of nozzle **100** toward the downstream end thereof, and the thrust field is substantially uniform and directed along thrust **114** of nozzle **100.** Accordingly, the exhaust stream of primary fluid flow ***F₁*** is substantially symmetric about thrust axis **114.**

**Fig. 3B** depicts a side view of nozzle **100** of **Fig. 3A** showing secondary fluid flow ***F₂*** injected into the exhaust stream through injectors **102** in a direction opposite to the direction of primary fluid flow ***F₁*.** The force exerted by secondary fluid flow ***F₂*** on primary fluid flow ***F₁*** skews primary fluid flow ***F₁*** away from side wall **106.** It should be clear, therefore, that by rendering injectors **102** operative, primary fluid flow ***F₁*** is deflected at an angle to axis **114,** thereby creating a pitch, roll, or yaw moment about the center of gravity of the vehicle in which nozzle **100** is incorporated to influence the direction of the vehicle. It should also be obvious that the strength of, or power behind, the injected secondary fluid flow ***F₂*** can also influence the deflection of primary fluid flow ***F₁***.

In general, the larger the angle at which secondary fluid flow **102** is injected against the direction of primary fluid flow ***F₁***, the greater the deflection of primary fluid flow ***F₁*** with respect to thrust axis **114.** Thus, higher thrust vectoring forces are generated by increasing the angle α at which injectors **102** are oriented with respect to the surface of sidewall **106, 110.** Sidewalls **106**, **108**, **110**, and/or **112** can include any number of rows of injectors **102,** and any number of injectors per row. One consideration, however, is the amount of secondary fluid flow ***F₂*** required to achieve the desired amount of thrust vectoring. In some configurations, a greater number of holes will diffuse the force per area of a given amount of secondary fluid flow ***F₂*** on primary fluid flow ***F₁.*** Additionally, injectors **102** positioned closer to exit area **118** typically generate more effective thrust vectoring force compared to injectors **102** positioned further upstream. In some embodiments, an auxiliary source of secondary fluid flow ***F₂,*** such as a tank of compressed fluid (not shown), can be coupled to plenum **130** and controller **224** (**Fig. 2**) to augment secondary fluid flow ***F₂*** from engine **200** (**Fig. 2**).

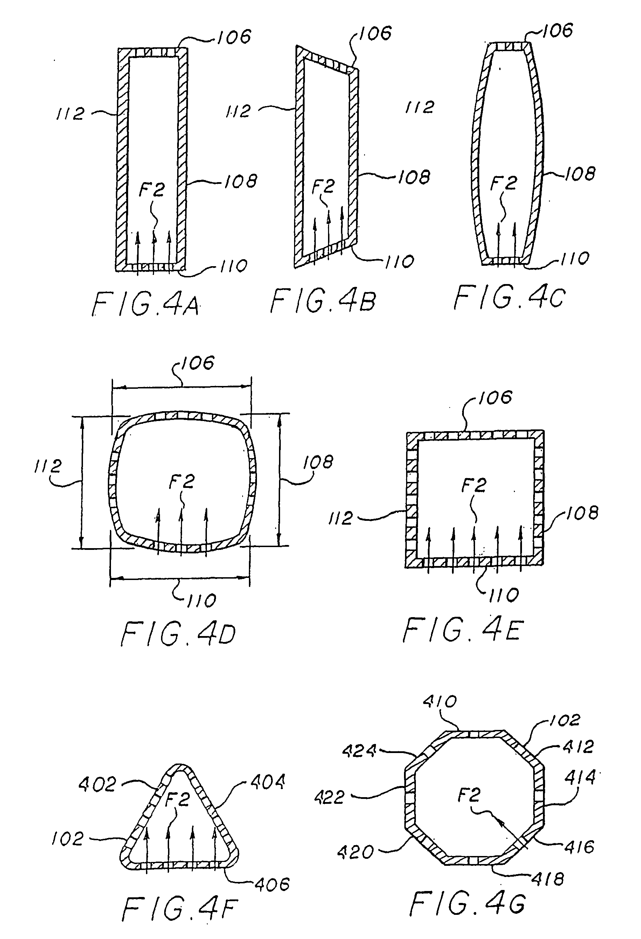

Referring to **Figs. 3B****,** and **4A** to **4G,** **Figs. 4A** through **4G** depict cross-sectional views of some examples of nozzle **100** adjacent exit area **118** in which secondary fluid injection can be utilized to provide thrust vectoring. **Figs. 4A** through **4C** show injectors **102** disposed in opposing side wall portions **106** and **110** to provide forces in two directions, however injectors **102** can also be disposed in side wall portions **108** and **112,** as shown in **Figs. 4D** and **4E**, to provide thrust vectoring forces in four directions.

The configurations shown in **Figs. 4A** to **4C** are typically integrated in a vehicle to provide either nose up/nose down thrust vectoring or nose left/nose right thrust vectoring. The configurations shown in **Figs. 4D** and **4E** can be used to provide nose up, nose down, nose left, and nose right thrust vectoring capability. Further, secondary flow ***F₂*** can be injected in adjacent sidewalls in the configurations shown in **Figs. 4D** and **4E** to cause simultaneous thrust vectoring forces in two directions, such as nose up/nose left, nose up/nose right, nose down/nose left, and nose down/nose right.

The configurations shown in **Figs. 4F** and **4G** show examples of configurations having three sidewalls **402**, **404**, **406**, and eight sidewalls **410**, **412**, **414**, **416**, **418**, **420**, **422**, **424**, respectively. Note that injectors **102** can be provided in any number of sidewalls to provide maneuvering control in the desired directions. Further, secondary flow ***F₂*** can be injected simultaneously in two or more sidewalls to effect maneuvering control in two or more directions. It should also be noted that the position of one or more of nozzle **100** on a vehicle can be selected with respect to the vehicle's center of gravity to increase or decrease the pitch, roll, and yaw moments that can be achieved with a given amount of thrust vectoring force.

In the configurations shown in **Figs. 4A** to **4C**, exit area **118** has a high aspect ratio, e.g. greater than 2, compared to configurations shown in **Figs**. **4D** and **4G**. For given amounts of primary fluid flow ***F₁*** and secondary fluid flow ***F₂***, and length of sidewalls **108** and/or **112**, the configurations shown in **Figs. 4A** to **4C** will exhibit greater deflection of primary fluid flow ***F₁***, when the injection occurs thru the shorter sidewall, than the configurations shown in **Figs. 4D** through **4G****.** This is due to the fact that the same amount of secondary fluid flow **F₂** is more concentrated in the shorter length of sidewall **106** or **110**, thus producing more deflection of the primary flow **F₁** near the wall. This effect is then propagated across the duct along sidewalls **108** and **112**, thus deflecting the entire primary flow **F₁.**

A variety of configurations other than those shown in **Figs. 1A** through **4G** can be utilized in various embodiments of nozzle **100.** Parameters that can be selected to achieve a desired amount of thrust vectoring include the angle at which secondary fluid flow ***F₂*** is injected against the direction of primary fluid flow ***F₁***, the aspect ratio of exit area **118,** the amount of secondary fluid flow ***F₂*** injected into primary fluid flow ***F₁***, the number of injectors **102,** the size of the injectors **102** and the position of injectors **102** relative to exit area **118.**

Experimental tests were conducted using a configuration of nozzle **100** having an aspect ratio of 4.5 at the nozzle exit **118**, with a secondary flow area of combined injectors **102** to throat area **120** ratio of 0.015. The holes were oriented in sidewall **106** to inject secondary fluid flow ***F₂*** at an angle of 125 degrees with respect to the direction of primary fluid flow ***F₁*** and located at approximately 90% of the length from throat **120** to exit area **118**. Injectors **102** in sidewall **106** had a cylindrical shape with a length to diameter ratio over 2. The test configuration nozzle **100** exhibited peak thrust vector angles of up to approximately twenty-two (22) degrees utilizing 6 percent of primary fluid flow ***F₁*** to supply secondary fluid flow ***F₂*** at a low NPR of 1.3. Twelve and one-half (12.5) degrees of vectoring were achieved at NPR 4 with 5 percent of ***F₂***/***F₁**.* Superior fluidic thrust vectoring capability of 2.5 degrees of thrust vector angle per percent of primary fluid flow ***F₁*** utilized for thrust vectoring was achieved for NPR 4 and 3.6 degrees per percent ***F₁*** at NPR 1.3. In contrast, known prior art devices are only capable of deflecting primary fluid flow ***F₁*** approximately 1.6 degrees for every one percent of primary fluid flow ***F₁*** utilized to supply secondary fluid flow ***F₂*** for NPR 4.

Embodiments of nozzle **100** can be incorporated in a variety of devices where thrust vectoring can be utilized including devices that operate on the ground and/or in the air. Additionally, other embodiments of an apparatus for deflecting the flow of a primary fluid by injecting a secondary fluid against the direction of the primary fluid can be provided for uses in addition to thrust vectoring in vehicles. Applications can include devices in the medical, agricultural, entertainment, and transportation industries, for example. The primary and secondary fluids can be in gaseous, solid particle, or liquid form.

## Claims

1. An apparatus for altering the direction of an exhaust stream produced by an aircraft engine, comprising:
an upstream end portion (116), a downstream end portion (118), and a throat area (120) between the upstream end portion and the downstream end portion;
at least one pair of opposing side wall portions (106, 108, 110, 112) at the downstream end portion;
an exit area (118) in the downstream end portion at an end opposite the end adjoining the throat area, wherein the exhaust stream exits the apparatus at the exit area; and
at least one injector (102) positioned on one of the side wall portions adjacent the exit area, the at least one injector being oriented to inject a secondary fluid flow into the exhaust stream in a direction opposing the direction of flow of the exhaust stream;
**characterised in that** the aspect ratio of the sidewall portion at the exit area is approximately 4.5 and the ratio of the total area of the at least one injector to throat area is approximately 0.015.

2. The apparatus of claim 1, wherein the upstream end portion (116) is convergent toward the throat area (120).

3. The apparatus of Claim 1, wherein the opposing side wall portions (106-112) at the downstream end portion diverge downstream from the throat area (120).

4. The apparatus of Claim 3, wherein the at least one injector (102) is positioned on one of the divergent side wall portions.

5. The apparatus of Claim 4, wherein the side wall portions (106-112) form a rectangular cross-section at the downstream end (118).

6. The apparatus of Claim 4, wherein the side wall portions (106-112) form a polygonal cross-section at the downstream end.

7. The apparatus of Claim 4, comprising four side wall portions (106-112), wherein two opposing side wall portions (106,110) are substantially parallel to one another.

8. The apparatus of Claim 7, wherein the other two opposing side wall portions (108,112) form an arcuate cross section.

9. The apparatus of Claim 1, wherein at least one injector (102) is positioned in each side wall portion.

10. The apparatus of Claim 9, comprising at least two injectors (102), wherein the at least two injectors are operable independently of one another.

11. The apparatus of Claim 1, wherein the at least one injector is positioned adjacent the exit area at approximately 90% of the length from the throat area to the exit area.

12. The apparatus of Claim 1, wherein the at least one injector is disposed in the side wall portion by forming a hole having an oblique cylindrical shape in the side wall portion (106, 110).

13. The apparatus of Claim 11, wherein the at least one injector is oriented in one of the side wall portions to inject secondary flow at an angle of approximately 125 degrees with respect to the direction of the primary fluid flow.

14. The apparatus of Claim 1, further comprising: a controller coupled to a source of the secondary fluid, wherein the controller is operable to regulate the amount and duration of the injection of the secondary fluid.

15. The apparatus of Claim 14, wherein the injector is disposed in a portion of the device by forming a hole having a cylindrical shape, the device further comprising: a plenum covering one side of the hole, wherein the secondary fluid is delivered to the plenum and injected into the primary flow through the at least one injector.

16. The apparatus of Claim 15, further comprising: a plurality of injectors; and a plurality of plenums, wherein each plenum provides the secondary fluid to at least one of the injectors.

17. The apparatus of Claim 16, wherein the controller is operable to regulate the amount and duration of the injection of the secondary fluid to each plenum independently.

18. The apparatus of Claim 17, wherein the controller is operable to supply the secondary fluid to at least two of the plurality of injectors simultaneously.

19. An engine with thrust vectoring capability comprising an apparatus as claimed in claim 1, wherein the throat area (120) comprises a throat portion of the engine, the exit area (118) comprises an exit portion of the engine, and the upstream end portion (1160 comprises an inlet portion of the engine, and wherein a stream of primary fluid enters the throat portion and is exhausted through the exit portion during operation, the at least one injector being disposed in at least one of the side wall portions to inject a secondary fluid into the stream of the primary fluid.

20. The engine of claim 19, further comprising: a plenum (130) coupled to supply the secondary fluid to the at least one injector.

21. The engine of claim 19, further comprising: a duct coupled between an upstream area of the engine and the at least one injector, wherein the secondary fluid is supplied from a portion of the primary fluid stream.

22. The engine of claim 19, wherein a pair of the side wall portions diverge from one another between the inlet portion and the exit portion.

23. The engine of claim 19, wherein a pair of the side wall portions are situated on opposing sides of the nozzle, each side wall including a plurality of injectors, wherein the injectors are selectively operable to inject the secondary fluid into the stream of the primary fluid.

24. The engine of claim 19, further comprising: a duct coupled to supply the secondary fluid to the at least one injector; and a controller coupled to the duct to regulate the amount of the secondary fluid that is injected into the primary fluid stream.

25. The engine of claim 19, wherein at least two side walls include at least one injector.

26. The engine of Claim 25, wherein the injectors are operable simultaneously and independently of one another.

27. The engine of Claim 19, wherein the at least one injector is disposed in the side wall portion by forming a hole in the side wall portion.

28. The engine of Claim 27, wherein the hole is oriented at an angle toward the inlet portion with respect to the surface of the side wall portion.

29. The engine of Claim 25, wherein the injector is positioned adjacent the exit portion at approximately 90% of the length from the throat portion to the exit portion.

30. A vehicle comprising an engine as claimed in claim 19, wherein the vehicle has an exhaust area through which the stream of primary fluid exits the vehicle, wherein the at least one injector is oriented to inject the secondary fluid at an angle greater than 90 degrees with respect to the direction of flow of the primary fluid.

31. The vehicle of claim 30, further comprising: a duct coupled to extract a portion of the primary fluid to supply the secondary fluid.

32. The vehicle of claim 30, wherein the at least one injector is disposed adjacent the exhaust area at approximately 90% of the length from a throat portion to the exhaust area.

33. The vehicle of claim 32, wherein at least two of the side wall portions each include at least one injector, wherein the injectors are selectively operable to inject the secondary fluid into the stream of the primary fluid.

34. The vehicle of claim 30, further comprising: a duct coupled to supply the secondary fluid to the at least one injector; and a controller coupled to the duct to regulate the amount of the secondary fluid that is injected into the primary fluid stream.

35. The vehicle of Claim 30, wherein the at least one injector is disposed in the vehicle by forming a hole in a portion of the vehicle proximate the exhaust area.

36. The vehicle of Claim 30, wherein the at least one injector is oriented to inject the secondary fluid in lateral and opposing directions with respect to the direction of flow of the primary fluid.

37. The vehicle of Claim 30, further comprising another injector, wherein the injectors are operable independently.

38. The vehicle of Claim 30, further comprising a source of secondary fluid that is provided independently from the primary fluid.

39. A method for manoeuvring a vehicle by aftering the direction of an exhaust stream produced by an aricraft engine,wherein the engine includes an exhaust area (118) through which a primary fluid exits the the method comprising: injecting a secondary fluid proximate the exhaust area (118),
**characterised in that** the secondary fluid is injected at an angle greater than 90 degrees with respect to the direction of flow of the primary fluid, **in that** the aspect ratio of sidewall portions (106, 108, 110, 112) at the exhaust area (118) is approximately 4.5, **in that** the ratio of the total area of the at least one injector to throat area is approximately 0.015, and **in that** a substantial portion of the injection area is disposed adjacent the exhaust area at approximately 90% or more of the length from a throat portion to the exhaust area.

40. The method of Claim 39 further comprising: injecting the secondary fluid at multiple locations proximate the exhaust area.

41. The method as set forth in Claim 40 wherein the secondary fluid can be injected selectively in at least one of the multiple locations.

## Patentansprüche

1. Vorrichtung zum Ändern der Richtung eines von einem Flugzeugtriebwerk erzeugten Abgasstroms, die Folgendes umfasst:
einen stromaufwärtigen Endabschnitt (116), einen stromabwärtigen Endabschnitt (118) und einen Kehlbereich (120) zwischen dem stromaufwärtigen Endabschnitt und dem stromabwärtigen Endabschnitt;
wenigstens ein Paar gegenüberliegender Seitenwandabschnitte (106, 108, 110, 112) am stromabwärtigen Endabschnitt;
einen Austrittsbereich (118) im stromabwärtigen Endabschnitt an einem Ende gegenüber dem Ende neben dem Kehlbereich, wobei der Abgasstrom die Vorrichtung am Austrittsbereich verlässt; und
wenigstens einen Injektor (102), der sich an einem der Seitenwandabschnitte neben dem Austrittsbereich befindet, wobei der wenigstens eine Injektor so orientiert ist, dass er einen Sekundärfluidfluss in den Abgasstrom in einer Richtung entgegengesetzt zur Fließrichtung des Abgasstroms injiziert;
**dadurch gekennzeichnet, dass** das Querschnittsverhältnis des Seitenabschnitts am Austrittsbereich etwa 1:4,5 und das Verhältnis zwischen der Gesamtfläche des wenigstens einen Injektors und dem Kehlbereich etwa 1:0,015 beträgt.

2. Vorrichtung nach Anspruch 1, wobei der stromaufwärtige Endabschnitt (116) in Richtung Kehlbereich (120) konvergiert.

3. Vorrichtung nach Anspruch 1, wobei die gegenüberliegenden Seitenwandabschnitte (106-112) am stromabwärtigen Endabschnitt stromabwärts vom Kehlbereich (120) divergieren.

4. Vorrichtung nach Anspruch 3, wobei der wenigstens eine Injektor (102) an einem der divergierenden Seitenwandabschnitte positioniert ist.

5. Vorrichtung nach Anspruch 4, wobei die Seitenwandabschnitte (106-112) einen rechteckigen Querschnitt am stromabwärtigen Ende (118) bilden.

6. Vorrichtung nach Anspruch 4, wobei die Seitenwandabschnitte (106-112) einen polygonalen Querschnitt am stromabwärtigen Ende bilden.

7. Vorrichtung nach Anspruch 4, die vier Seitenwandabschnitte (106-112) umfassen, wobei zwei gegenüberliegende Seitenwandabschnitte (106, 110) jeweils im Wesentlichen parallel zueinander sind.

8. Vorrichtung nach Anspruch 7, wobei die beiden anderen gegenüberliegenden Seitenwandabschnitte (108, 112) einen bogenförmigen Querschnitt bilden.

9. Vorrichtung nach Anspruch 1, wobei sich in jedem Seitenwandabschnitt wenigstens ein Injektor (102) befindet.

10. Vorrichtung nach Anspruch 9, die wenigstens zwei Injektoren (102) umfasst, wobei die wenigstens zwei Injektoren unabhängig voneinander betrieben werden können.

11. Vorrichtung nach Anspruch 1, wobei sich der wenigstens eine Injektor neben dem Austrittsbereich bei etwa 90 % der Länge vom Kehlbereich zum Austrittsbereich befindet.

12. Vorrichtung nach Anspruch 1, wobei der wenigstens eine Injektor im Seitenwandabschnitt angeordnet wird, indem ein Loch mit einer schrägen zylindrischen Form im Seitenwandabschnitt (106, 110) ausgebildet wird.

13. Vorrichtung nach Anspruch 11, wobei der wenigstens eine Injektor so in einem der Seitenwandabschnitte orientiert ist, dass ein Sekundärfluss in einem Winkel von etwa 125 Grad mit Bezug auf die Richtung des Primärfluidstroms injiziert wird.

14. Vorrichtung nach Anspruch 1, die ferner Folgendes umfasst: eine Steuerung, die mit einem Vorrat für das Sekundärfluid gekoppelt ist, wobei die Steuerung Menge und Dauer der Injektion des Sekundärfluids regulieren kann.

15. Vorrichtung nach Anspruch 14, wobei der Injektor in einem Abschnitt der Vorrichtung durch Ausbilden eines Lochs mit einer zylindrischen Form angeordnet wird, wobei die Vorrichtung ferner Folgendes umfasst: eine Kammer, die eine Seite des Lochs abdeckt, wobei das Sekundärfluid der Kammer zugeführt und durch den wenigstens einen Injektor in den Primärfluss injiziert wird.

16. Vorrichtung nach Anspruch 15, die ferner Folgendes umfasst: mehrere Injektoren; und mehrere Kammern, wobei jede Kammer das Sekundärfluid wenigstens einem der Injektoren zuführt.

17. Vorrichtung nach Anspruch 16, wobei die Steuerung die Aufgabe hat, Menge und Dauer der Injektion des Sekundärfluids zu jeder Kammer unabhängig zu regulieren.

18. Vorrichtung nach Anspruch 17, wobei die Steuerung die Aufgabe hat, das Sekundärfluid wenigstens zwei der mehreren Injektoren gleichzeitig zuzuführen.

19. Triebwerk mit Schubvektorsteuerfähigkeit, das eine Vorrichtung nach Anspruch 1 umfasst, wobei der Kehlbereich (120) einen Kehlabschnitt des Triebwerks umfasst, wobei der Austrittsbereich (118) einen Austrittsabschnitt des Triebwerks umfasst und der stromaufwärtige Endabschnitt (116) einen Einlassabschnitt des Triebwerks umfasst, und wobei ein Primärfluidstrom in den Kehlabschnitt eintritt und beim Betrieb durch den Austrittsabschnitt abgelassen wird, wobei der wenigstens eine Injektor in wenigstens einem der Seitenwandabschnitte angeordnet ist, um ein Sekundärfluid in den Strom des Primärfluids zu injizieren.

20. Triebwerk nach Anspruch 19, das ferner Folgendes umfasst: eine Kammer (130), gekoppelt zum Zuführen des Sekundärfluids zu dem wenigstens einen Injektor.

21. Triebwerk nach Anspruch 19, das ferner Folgendes umfasst: einen Kanal, der zwischen einem stromaufwärtigen Bereich des Triebwerks und dem wenigstens einen Injektor gekoppelt ist, wobei das Sekundärfluid von einem Abschnitt des Primärfluidstroms zugeführt wird.

22. Triebwerk nach Anspruch 19, wobei ein Paar der Seitenwandabschnitte zwischen dem Einlassabschnitt und dem Austrittsabschnitt voneinander divergieren.

23. Triebwerk nach Anspruch 19, wobei sich ein Paar der Seitenwandabschnitte auf gegenüberliegenden Seiten der Düse befindet, wobei jede Seitenwand mehrere Injektoren aufweist, wobei die Injektoren selektiv betrieben werden können, um das Sekundärfluid in den Strom des Primärfluids zu injizieren.

24. Triebwerk nach Anspruch 19, das ferner Folgendes umfasst: einen Kanal, der zum Zuführen des Sekundärfluids zu dem wenigstens einen Injektor gekoppelt ist; und eine Steuerung, die mit dem Kanal gekoppelt ist, um die Menge des in den Primärfluidstrom injizierten Sekundärfluids zu regulieren.

25. Triebwerk nach Anspruch 19, wobei wenigstens zwei Seitenwände wenigstens einen Injektor aufweisen.

26. Triebwerk nach Anspruch 25, wobei die Injektoren gleichzeitig und unabhängig voneinander betrieben werden können.

27. Triebwerk nach Anspruch 19, wobei der wenigstens eine Injektor im Seitenwandabschnitt angeordnet wird, indem ein Loch im Seitenwandabschnitt ausgebildet wird.

28. Triebwerk nach Anspruch 27, wobei das Loch in einem Winkel in Richtung des Einlassabschnitts mit Bezug auf die Oberfläche des Seitenwandabschnitts orientiert ist.

29. Triebwerk nach Anspruch 25, wobei sich der Injektor neben dem Austrittsabschnitt bei etwa 90 % der Länge vom Kehlabschnitt zum Austrittsabschnitt befindet.

30. Fahrzeug, das ein Triebwerk nach Anspruch 19 umfasst, wobei das Fahrzeug einen Abgasbereich hat, durch den der Primärfluidstrom das Fahrzeug verlässt, wobei der wenigstens eine Injektor so orientiert ist, dass er das Sekundärfluid in einem Winkel von mehr als 90 Grad mit Bezug auf die Fließrichtung des Primärfluids injiziert.

31. Fahrzeug nach Anspruch 30, das ferner Folgendes umfasst: einen Kanal, der zum Extrahieren eines Teils des Primärfluids gekoppelt ist, um das Sekundärfluid zuzuführen.

32. Fahrzeug nach Anspruch 30, wobei der wenigstens eine Injektor neben dem Abgasbereich bei etwa 90 % der Länge von einem Kehlabschnitt zum Abgasbereich angeordnet ist.

33. Fahrzeug nach Anspruch 32, wobei wenigstens zwei der Seitenwandabschnitte jeweils wenigstens einen Injektor aufweisen, wobei die Injektoren alle selektiv betrieben werden können, um das Sekundärfluid in den Strom des Primärfluids zu injizieren.

34. Fahrzeug nach Anspruch 30, das ferner Folgendes umfasst: einen Kanal, der zum Zuführen des Sekundärfluids zu wenigstens einem Injektor gekoppelt ist; und eine Steuerung, die mit dem Kanal gekoppelt ist, um die in den Primärfluidstrom injizierte Menge des Sekundärfluids zu regulieren.

35. Fahrzeug nach Anspruch 30, wobei der wenigstens eine Injektor in dem Fahrzeug angeordnet wird, indem ein Loch in einem Abschnitt des Fahrzeugs in der Nähe des Abgasbereichs ausgebildet wird.

36. Fahrzeug nach Anspruch 30, wobei der wenigstens eine Injektor so orientiert ist, dass er das Sekundärfluid in lateralen und entgegengesetzten Richtungen mit Bezug auf die Fließrichtung des Primärfluids injiziert.

37. Fahrzeug nach Anspruch 30, das ferner einen weiteren Injektor umfasst, wobei die Injektoren unabhängig betrieben werden können.

38. Fahrzeug nach Anspruch 30, das ferner einen Vorrat von Sekundärfluid umfasst, der unabhängig von dem Primärfluid bereitgestellt wird.

39. Verfahren zum Manövrieren eines Fahrzeugs durch Ändern der Richtung eines von einem Flugzeugtriebwerk erzeugten Abgasstroms, wobei das Triebwerk einen Abgasbereich (118) aufweist, durch den ein Primärfluid das Triebwerk verlässt, wobei das Verfahren Folgendes beinhaltet: Injizieren eines Sekundärfluids in der Nähe des Abgasbereichs (118),
**dadurch gekennzeichnet, dass** das Sekundärfluid in einem Winkel von mehr als 90 Grad mit Bezug auf die Fließrichtung des Primärfluids injiziert wird, dadurch, dass das Querschnittsverhältnis von Seitenwandabschnitten (106, 108, 110, 112) im Abgasbereich (118) etwa 1:4,5 beträgt, dadurch, dass das Verhältnis zwischen der Gesamtfläche des wenigstens einen Injektors und dem Kehlbereich etwa 1:0,015 beträgt, und dadurch, dass ein erheblicher Teil des Injektionsbereichs neben dem Abgasbereich bei etwa 90 % oder mehr der Länge von einem Kehlbereich zum Abgasbereich angeordnet ist.

40. Verfahren nach Anspruch 39, das ferner Folgendes beinhaltet: Injizieren des Sekundärfluids an mehreren Stellen in der Nähe des Abgasbereichs.

41. Verfahren nach Anspruch 40, wobei das Sekundärfluid selektiv an wenigstens einer der mehreren Stellen injiziert werden kann.

## Revendications

1. Dispositif pour modifier la direction du flux d'éjection produit par un moteur d'aéronef, comprenant :
une partie d'extrémité amont (116), une partie d'extrémité aval (118), et une zone de gorge (120) entre la partie d'extrémité amont et la partie d'extrémité aval ;
au moins une paire de parties formant des parois opposées (106, 108, 110, 112) au niveau de la partie d'extrémité aval ;
une zone de sortie (118) dans la partie d'extrémité aval à une extrémité opposée à l'extrémité voisine de la zone de gorge, dans laquelle le flux d'éjection sort du dispositif au niveau de la zone de sortie ; et
au moins un injecteur (102) positionné sur l'une des parties formant des parois à proximité de la zone de sortie, le ou les injecteurs étant orientés de manière à injecter un flux de fluide secondaire dans le flux d'éjection dans une direction opposée à la direction d'écoulement du flux d'éjection ;
**caractérisé en ce que** le rapport de forme de la partie formant des parois au niveau de la zone de sortie est d'environ 4,5 et le rapport de la superficie totale du ou des injecteurs à la superficie de gorge est d'environ 0,015.

2. Dispositif selon la revendication 1, dans lequel la partie d'extrémité amont (116) converge vers la zone de gorge (120).

3. Dispositif selon la revendication 1, dans lequel les parties formant des parois opposées (106, 112) au niveau de la partie d'extrémité aval divergent vers l'aval par rapport à la zone de gorge (120).

4. Dispositif selon la revendication 3, dans lequel le ou les injecteurs (102) sont positionnés sur l'une des parties formant des parois divergentes.

5. Dispositif selon la revendication 4, dans lequel les parties formant des parois (106, 112) forment une section rectangulaire au niveau de l'extrémité aval (118).

6. Dispositif selon la revendication 4, dans lequel les parties formant des parois (106-112) forment une section polygonale à l'extrémité aval.

7. Dispositif selon la revendication 4, comprenant quatre parties formant des parois (106-112), dans lequel deux parties formant des parois latérales opposées (106, 110) sont sensiblement parallèles l'une à l'autre.

8. Dispositif selon la revendication 7, dans lequel les deux autres parties formant des parois opposées (108, 112) forment une section arquée.

9. Dispositif selon la revendication 1, dans lequel au moins un injecteur (102) est positionné dans chaque partie formant paroi.

10. Dispositif selon la revendication 9, comprenant au moins deux injecteurs (102), dans lequel les deux injecteurs ou plus peuvent être actionnés indépendamment l'un de l'autre.

11. Dispositif selon la revendication 1, dans lequel le ou les injecteurs sont positionnés à proximité de la zone de sortie à environ 90% de la longueur allant de la zone de gorge à la zone de sortie.

12. Dispositif selon la revendication 1, dans lequel le ou les injecteurs sont disposés dans la partie formant paroi par formation d'un trou ayant une forme cylindrique oblique dans la partie formant paroi (106, 110).

13. Dispositif selon la revendication 11, dans lequel le ou les injecteurs sont orientés dans l'une des parties formant parois pour injecter un flux secondaire suivant un angle d'environ 125 degrés par rapport à la direction du flux de fluide primaire.

14. Dispositif selon la revendication 1, comprenant en outre : un module de commande couplé à une source du fluide secondaire, le module de commande pouvant être actionné pour réguler la quantité et la durée de l'injection du fluide secondaire.

15. Dispositif selon la revendication 14, dans lequel l'injecteur est disposé dans une partie du dispositif par formation d'un trou ayant une forme cylindrique, le dispositif comprenant en outre : une chambre de distribution couvrant un côté du trou, le fluide secondaire étant fourni à la chambre de distribution et injecté dans le flux primaire par le ou les injecteurs.

16. Dispositif selon la revendication 15, comprenant en outre une pluralité d'injecteurs et une pluralité de chambres de distribution, chaque chambre de distribution fournissant le fluide secondaire à au moins un des injecteurs.

17. Dispositif selon la revendication 16, dans lequel le module de commande peut être utilisé pour réguler indépendamment la quantité et la durée de l'injection du fluide secondaire à chaque chambre de distribution.

18. Dispositif selon la revendication 17, dans lequel le module de commande peut être utilisé pour fournir le fluide secondaire à au moins deux de la pluralité d'injecteurs simultanément.

19. Moteur avec capacité d'orientation de la poussée comprenant un dispositif selon la revendication 1, dans lequel la zone de gorge (120) comprend une partie de gorge du moteur, la zone de sortie (118) comprend une partie de sortie du moteur, et la partie d'extrémité amont (116) comprend une partie d'entrée du moteur, et dans lequel un flux de fluide primaire entre dans la partie gorge et est évacué par la partie sortie pendant le fonctionnement, le ou les injecteurs étant disposés dans au moins l'une des parties formant parois pour injecter un fluide secondaire dans le flux de liquide primaire.

20. Moteur selon la revendication 19, comprenant en outre : une chambre de distribution couplée pour fournir le fluide secondaire à l'injecteur ou aux injecteurs.

21. Moteur selon la revendication 19, comprenant en outre : un conduit couplé entre une zone amont du moteur et le ou les injecteurs, dans lequel le fluide secondaire est fourni à partir d'une partie du flux de fluide primaire.

22. Moteur selon la revendication 19, dans lequel une paire des parties formant parois divergent l'une par rapport à l'autre entre la partie entrée et la partie sortie.

23. Moteur selon la revendication 19, dans lequel une paire des parties formant parois sont situées sur des côtés opposés de la tuyère, chaque paroi comprenant une pluralité d'injecteurs, les injecteurs étant actionnables sélectivement pour injecter le fluide secondaire dans le flux du fluide primaire.

24. Moteur selon la revendication 19, comprenant en outre : un conduit couplé pour fournir le fluide secondaire à l'injecteur ou aux injecteurs, et un module de commande couplé au conduit pour réguler la quantité du fluide secondaire qui est injectée dans le flux de fluide primaire.

25. Moteur selon la revendication 19, dans lequel au moins deux parois comprennent au moins un injecteur.

26. Moteur selon la revendication 25, dans lequel les injecteurs sont actionnables simultanément et indépendamment les uns des autres.

27. Moteur selon la revendication 19, dans lequel au moins un injecteur est disposé dans la partie formant paroi par la formation d'un trou dans la partie formant paroi.

28. Moteur selon la revendication 27, dans lequel le trou est orienté en formant un angle vers la paroi d'entrée par rapport à la surface de la partie formant paroi.

29. Moteur selon la revendication 25, dans lequel l'injecteur est positionné à proximité de la partie sortie à environ 90% de la longueur entre la partie gorge et la partie sortie.

30. Véhicule comprenant un moteur selon la revendication 19, le véhicule ayant une zone d'éjection à travers laquelle le flux de fluide primaire quitte le véhicule, le ou les injecteurs étant orientés pour injecter le fluide secondaire suivant un angle supérieur à 90 degrés par rapport à la direction du flux de fluide primaire.

31. Véhicule selon la revendication 30, comprenant en outre : un conduit couplé pour extraire une partie du fluide primaire pour fournir le fluide secondaire.

32. Véhicule selon la revendication 30, dans lequel le ou les injecteurs sont disposés à proximité de la zone d'éjection à environ 90% de la longueur entre la partie gorge et la zone d'éjection.

33. Véhicule selon la revendication 32, dans lequel au moins deux des parties formant parois comprennent chacune au moins un injecteur, les injecteurs étant actionnables sélectivement pour injecter le fluide secondaire dans le flux du fluide primaire.

34. Véhicule selon la revendication 30, comprenant en outre : un conduit couplé pour fournir le fluide secondaire à l'injecteur ou aux injecteurs, et un module de commande couplé au conduit pour réguler la quantité de fluide secondaire qui est injectée dans le flux de fluide primaire.

35. Véhicule selon la revendication 30, dans lequel le ou les injecteurs sont disposés dans le véhicule par formation d'un trou dans une partie du véhicule proche de la zone d'éjection.

36. Véhicule selon la revendication 30, dans lequel le ou les injecteurs sont orientés de manière à injecter le fluide secondaire dans des directions latérales et opposées par rapport à la direction du flux de fluide primaire.

37. Véhicule selon la revendication 30, comprenant en outre un autre injecteur, les injecteurs étant actionnables indépendamment.

38. Véhicule selon la revendication 30, comprenant en outre une source de fluide secondaire qui est fourni indépendamment du fluide primaire.

39. Procédé de manoeuvre d'un véhicule par changement de la direction d'un flux d'éjection produit par un moteur d'aéronef, dans lequel le moteur comprend une zone d'éjection (118) par laquelle un fluide primaire quitte le moteur, le procédé comprenant : l'injection d'un fluide secondaire à proximité de la zone d'éjection (118),
**caractérisé en ce que** le fluide secondaire est injecté suivant un angle supérieur à 90 degrés par rapport à la direction du flux de fluide primaire, **en ce que** le rapport de forme des parties formant des parois (106, 108, 110, 112) dans la zone d'éjection (118) est d'environ 4,5, **en ce que** le rapport de la superficie totale du ou des injecteurs à la superficie de gorge est d'environ 0,015, et **en ce qu'**une partie importante de la zone d'injection est disposée à proximité de la zone d'éjection à environ 90% ou plus de la longueur entre une partie gorge de la zone d'éjection.

40. Procédé selon la revendication 39, comprenant en outre : l'injection du fluide secondaire à des emplacements multiples à proximité de la zone d'éjection.

41. Procédé selon la revendication 40, dans lequel le fluide secondaire peut être injecté sélectivement dans au moins l'un des emplacements multiples.
